# EUROPEAN PATENT APPLICATION

(11) **EP 2 575 096 A1**
(43) Date of publication of application: **03.04.2013**
(21) Application number: 11182892.7
(22) Date of filing: 27.09.2011
(51) Int. Cl.: G06Q 20/00

(54) **Transaction**

(71) Applicant: Seamless Distribution AB, 11343 Stockholm (SE)
(72) Inventor: Fredell, Peter, 432 76 Tvååker (SE)
(74) Representative: Melin Granberg, Linda

(57) **Abstract**

The present invention relates to a method for identifying a buyer (1) and a seller (2) and performing an economical transaction between the buyer (1) and the seller (2) at a point of sale (21), where the buyer (1) has a mobile device (11), where the point of sale (21) communicates with a transaction system (3), and where the transaction system (3) transfers funds (31) from the buyer to the seller according to given information from the buyer and the seller. The inventive method includes the steps of: the mobile device (11) reading an identity of the point of sale (24) by means of a camera belonging to the mobile device (11), the mobile device (11) generating and sending a first message (M1) to the transaction system (3), the first message (M1) comprising the identity of the point of sale (24) and the identity of the mobile device (14), the point of sale (21) generating and sending a second message (M2), time wise independent from the first message (M1), to the transaction system (3), the second message (M2) comprising the identity of the point of sale (24) and the sum to be paid (25), the transaction system (3) matching the first message (M1) with the second message (M2) by means of the identity of the point of sale (24), the transaction system (3) generating and sending a third message (M3) to the mobile device (11), the third message (M3) comprising the sum to be paid (25), the buyer (1) approving or rejecting the sum to be paid (25) on the mobile device (11), the mobile device (11) generating and sending a fourth message (M4) to the transaction system (3), the fourth message (M4) comprising an approval or rejection (15) of the transfer of funds from the buyer to the seller according to the approved sum (25) to be paid, the transaction system (3) performing the transfer (31) of the approved funds (25) from the buyer to the seller, and the transaction system (3) generating and sending a fifth message (M5) to the point of sale (21), the fifth message (M5) comprising a confirmation (32) of the transfer of funds (31).

## Description

### Field of invention

The present invention relates to a method for identifying a buyer and a seller where the buyer is present at a point of sale, and for performing an economical transaction between the buyer and the seller, where the buyer has a mobile device, where the point of sale communicates with a transaction system, and where the transaction system transfers funds from the buyer to the seller according to given information from the buyer and the seller.

The present invention also relates to an arrangement and computer program products where through the inventive method can be realized.

### Description of background art

It is known to use transaction systems where through funds can be sent from one part to another, the parties having agreements and accounts with a vendor, bank, credit supplier or other financial institution. The transaction system requires at least an identification of the two parties, account details for the two parties and an order from the paying part to perform the transaction.

The two parties can be a buyer and a seller where funds are to be moved from the buyer to the seller as payment for goods or services. The buyer is present at a point of sale belonging to the seller. It is then known that the buyer identifies himself at the point of sell and that the point of sell sends required information to the transaction system, that is information identifying the buyer, the seller and the sum of money that is to be transferred.

There are many known ways to identify the buyer at the point of sale. The most common way is for the buyer to identify himself with some kind of credit or bank card in combination with an identification card or a personal code provided by the buyer to the point of sale. The credit or bank card can be a smart card which can communicate with the point of sale and thereby identify the buyer. A smart card, or unique information from a SIM card in a mobile device, such as a telephone number, can be used in combination with a personal code, preventing the use of the smart card or mobile device by anyone else but the rightful user.

It is also known that the buyer has a mobile device, such as a smart phone or any other kind of mobile computer, through which it is possible to identify the buyer. Such mobile device can be adapted to identify the buyer to the point of sale by means of radio frequency identification (RFID) or near field communication (NFC). Many times these mobile devices are adapted to data communication via internet or a cell phone network in which case the mobile device has a subscriber identity module (SIM card) through which both the device and the buyer can be identified. It is known to use the possibilities to read the SIM card remotely from a point of sale by means of RFID or NFC and thereby obtaining information on the identity of the buyer.

Regardless of how the buyer identifies himself at the point of sale, the match between the buyer and the seller is made at the point of sale and required information is sent from the point of sale to the transaction system where the transaction can be made.

Confirmation of the performed transaction is sent from the transaction system to the point of sale and the point of sale provides a receipt to the buyer.

### Summary of the present invention

### Problems

It is a technical problem to identify both buyer and seller at a point of sale so that required information for the transfer of funds in a transaction system can be gathered in a safe and secure manner.

The use of mobile devices is increasing and a demand is rising to use these devices for the identification of a buyer at a point of sale. It is an economical investment to provide means for communication between the point of sale and the mobile device of a buyer so that the point of sale easily and safely can identify the user of the mobile device by means of remote communication.

The use of RFID or NFC for these purposes requires that both the mobile device and the point of sale are equipped with hardware that will enable such communication, which is a cost for both the point of sale and the mobile device. In places with several points of sale, such as in a supermarket, it is a high cost to provide each point of sale with required hardware for such communication.

The increased hardware complexity for the point of sale also means increased support and service in order to provide a safe and reliable use of this technology.

It is thus a problem to provide the possibility to identify the buyer by means of a mobile device at a point of sale using remote communication between the mobile device and the point of sale without the use of RFID or NFC.

### Solution

With the purpose of solving one or more of the above mentioned problems, and from the standpoint of the field of invention as described above, the present invention teaches that instead of the point of sale reading the identity of the mobile device, it is proposed that the mobile device is reading an identity of the point of sale by means of a camera belonging to the mobile device.

Most mobile devices today are equipped with a camera so this does not require any extra hardware modifications of the mobile device or the point of sale.

It is proposed that the mobile device generates and sends a first message to the transaction system, the first message comprising the identity of the point of sale and the identity of the mobile device.

The point of sale generates and sends a second message, time wise independent from the first message, to the transaction system, the second message comprising the identity of the point of sale and the sum to be paid.

The transaction system makes a match between the first message and the second message by means of the identity of the point of sale. This means that the match between the buyer and the seller is not done at the point of sale, as in known systems, but in the transaction system.

The transaction system generates and sends a third message to the mobile device, the third message comprising the sum to be paid as received in the second message.

The buyer approves the sum to be paid on the mobile device, and the mobile device generates and sends a fourth message to the transaction system, the fourth message comprising an approval or rejection of the transfer of funds from the buyer to the seller according to the approved sum to be paid.

The transaction system now has required information to perform the transaction and the transaction system performs the transfer of the approved funds from the buyer to the seller.

As the transaction has been performed the transaction system generates and sends a fifth message to the point of sale, the fifth message comprising a confirmation of the transfer of funds.

In this way both the buyer and the seller are identified and the transaction system can perform the transaction based on information received from both the buyer and the seller in a safe and secure manner.

It is proposed that the buyer is using a personal code on the mobile device to approve the sum to be paid in order to increase safety and prevent unauthorized persons to use the mobile device for economical transactions.

The identity of the point of sale is represented by a graphical tag, and the mobile device translates the graphical tag into the identity of the point of sale. Such graphical tag can be for instance a bar code, a quick response code, a datamatrix, or a proprietary code such as a shotcode. These codes can easily be produced and displayed at the point of sale so that it is available for the buyer to use the camera of the mobile device to read the graphical tag. In a big supermarket or place of business with many points of sale it is inexpensive and easy to provide each point of sale with its individual identity. Computer programs required to read such tag and translate it into an understandable identification are readily available for most mobile devices equipped with a camera.

The point of sale can be a physical point of sale, in which case it can be a stationary point of sale, such as a warehouse, a supermarket, a restaurant, a hair dresser or a petrol station, or a mobile point of sale, such as a point of sale that belongs to a bus, a train, a boat, a taxi, a mobile sales representative, or a mobile point of sale in a restaurant.

According to one proposed embodiment it is possible that a personal device function as a point of sale, and that two person, the owner of the personal device and the buyer, use the inventive method to send funds from the buyer to the owner of the personal device, the personal device being any personal device where through the owner of the personal device can access the transaction system, such as a mobile telephone, a mobile computer or a stationary computer.

It is proposed that the point of sale is a cashiers register, and that the cashier register generates the second message and receives the fifth message.

With a physical point of sale it is proposed that the point of sale generates a receipt for the transaction to the buyer.

The present invention can also be used where the point of sale is a virtual point of sale, such as an online shop available on the Internet.

In this case the actual point of sale can be a server related to the seller, where the server generates the second message and receives the fifth message.

When the point of sale is physical it is approachable by the buyer and handles only one buyer at the time. However, with a virtual point of sale, such as an online Internet shop, many buyers can approach the point of sale simultaneously. It is thus proposed that for a virtual point of sale a unique identity for the point of sale is generated and a representation of the unique identity is displayed for each transaction.

Regardless of if the point of sale produces a receipt or not, the present invention proposes that the transaction system can generate and send a sixth message to the mobile device, the sixth message comprising a confirmation of the transfer of funds.

If the point of sale is mobile it is proposed that the point of sale communicates with the transaction system by means of wireless communication.

It is also proposed that the mobile device communicates with the transaction system by means of wireless communication.

The present invention also relates to an arrangement comprising a mobile device, a point of sale and a transaction system. The arrangement is adapted to identify a buyer and a seller and to perform an economical transaction between the buyer and the seller, the point of sale belonging to the seller and the mobile device belonging to the buyer. The point of sale and the transaction system are adapted to communicate with each other, and the transaction system is adapted to transfer funds from the buyer to the seller according to given information from the buyer and the seller.

The present invention specifically teaches that the mobile device and the transaction system are adapted to communicate with each other and that the mobile device comprises a camera.

The mobile device is adapted to read an identity of the point of sale by means of the camera and to generate and send a first message to the transaction system, the first message comprising the identity of the point of sale and the identity of the mobile device.

The point of sale is adapted to generate and send a second message, time wise independent from the first message, to the transaction system, the second message comprising the identity of the point of sale and the sum to be paid.

The transaction system is adapted to match the first message with the second message by means of the identity of the point of sale and to generate and send a third message to the mobile device, the third message comprising the sum to be paid.

The mobile device is adapted to receive an approval or rejection of the sum to be paid from the buyer, and then to generate and send a fourth message to the transaction system, the fourth message comprising an approval or rejection of the transfer of funds from the buyer to the seller according to the approved sum to be paid.

The transaction system is adapted to perform the transfer of the approved funds from the buyer to the seller, and to generate and send a fifth message to the point of sale, the fifth message comprising a confirmation of the transfer of funds.

It is possible for the buyer to approve the sum to be paid, and the present invention proposes that one such way of approval is that the mobile device is adapted to receive a personal code from the buyer in order for the buyer to approve the sum to be paid.

With the purpose of providing an inexpensive and simple way of identifying the point of sale it is proposed that the identity of the point of sale is represented by a graphical tag, and that the mobile device is adapted to translate the graphical tag into the identity of the point of sale.

The graphical tag can be many different things, such as a bar code, a quick response code, a datamatrix, or a proprietary code such as a shotcode.

The point of sale can be either a physical point of sale or a virtual point of sale.

A physical point of sale can be a stationary point of sale, such as a warehouse, a restaurant, a hair dresser or a petrol station, or a mobile point of sale, such as a point of sale that belongs to a bus, a train, a boat, a taxi, a mobile sales representative or a mobile point of sale in a restaurant.

One proposed embodiment of the present invention teaches that a personal device is adapted to function as a point of sale, where the personal device and the mobile device are adapted to enable two person, the owner of the personal device and the buyer, to send funds from the buyer to the owner of the personal device. The personal device can be any personal device where through the owner of the personal device can access the transaction system, such as a mobile telephone, a mobile computer or a stationary computer.

If the point of sale is a traditional cashier register, then the cashier register can be adapted to generate the second message and receive the fifth message.

The point of sale can be adapted to generate a receipt for the transaction to the buyer.

A virtual point of sale can be hosted by a server related to the seller and can for instance be an online shop available on the Internet, in which case the server can be adapted to generate the second message and receive the fifth message.

In order to enable several buyers to interact simultaneously with a virtual point of sale it is proposed that the server is adapted to generate a unique identity for the point of sale for each transaction and to display a representation of the identity on the virtual point of sale.

Independent from the possibility for the buyer to receive a receipt from the point of sale, it is proposed that the transaction system can be adapted to send a sixth message to the mobile device, the sixth message comprising a confirmation of the transfer of funds.

If the point of sale is mobile then it is proposed that the point of sale is adapted to communicate with the transaction system by means of wireless communication.

It is also proposed that that the mobile device is adapted to communicate with the transaction system by means of wireless communication.

The present invention also relates to a number of computer program products. Since the inventive method and arrangement involves three devices, the mobile device, the point of sale and the transaction system, three separate computer program products are required to realize the invention.

The present invention relates to a computer program product comprising computer program code, which, when executed by a mobile device, enables the mobile device to perform the steps of:
- reading an identity of a point of sale by means of a camera belonging to the mobile device,
- generating and sending a first message to a transaction system, the first message comprising the identity of the point of sale and the identity of the mobile device,
- receiving from the transaction system a third message, the third message comprising a sum to be paid,
- receiving an approval or rejection from a buyer approving or rejecting the sum to be paid, and
- generating and sending a fourth message to the transaction system, the fourth message comprising an approval or rejection of the transfer of funds from the buyer to the seller according to the approved sum to be paid.

It is also proposed that this computer program product may comprise computer program code which, when executed by the mobile device, enables the mobile device to perform the step of receiving a personal code from the buyer to identify the buyer as the buyer approves the sum to be paid.

It is also proposed that this computer program product may comprise computer program code which, when executed by the mobile device, enables the mobile device to perform the step of translating a graphical tag received through the camera into the identity of the point of sale.

The present invention also relates to a computer program product comprising computer program code, which, when executed by a computer belonging to a point of sale, enables the computer to perform the steps of:
- generating and sending a second message to a transaction system, the second message comprising the identity of the point of sale and a sum to be paid, and
- receiving from the transaction system a fifth message, the fifth message comprising a confirmation of the transfer of funds.

It is also proposed that this computer program product comprises computer program code, which, when executed by a computer belonging to a point of sale, enables the computer to perform the steps of
- generating a unique identity for the point of sale and a representation of the identity for each transaction, and
- displaying the representation of the generated identity.

The present invention also relates to a computer program product comprising computer program code, which, when executed by a transaction system enables the transaction system to perform the steps of:
- receiving from a mobile device a first message, the first message comprising the identity of a point of sale and the identity of the mobile device,
- receiving from the point of sale a second message, the second message comprising the identity of the point of sale and a sum to be paid,
- matching the first message with the second message by means of the identity of the point of sale,
- generating and sending a third message to the mobile device, the third message comprising the sum to be paid,
- receiving from the mobile device a fourth message, the fourth message comprising an approval or rejection of the transfer of funds from the buyer to the seller according to the approved sum to be paid,
- performing the transfer of the approved funds from the buyer to the seller, and
- generating and sending a fifth message to the point of sale, the fifth message comprising a confirmation of the transfer of funds.

It is also proposed that this computer program product comprises computer program code, which, when executed by a transaction system enables the transaction system to perform the step of generating and sending a sixth message to the mobile device, the sixth message comprising a confirmation of the transfer of funds.

### Advantages

The advantages of a method, an arrangement and computer program products according to the present invention are that a safe transaction of funds between a buyer and a seller can be provided within the current infrastructure, without any extra hardware. Mobile devices, such as smart phones or mobile computers, are equipped with a camera and a wireless online connection to different data systems, and points of sale today are also equipped with a communication connection to some kind of transaction system. The only physical or hardware change required is a visual identity of the point of sale that can be read by the mobile device with its camera, such as a graphical tag which can be printed and attached to the point of sale for a very low cost.

Since the match between the buyer and the seller is made in the transaction system, and not in the point of sale, the point of sale does not have to manage any issues regarding identification of the buyer. This relieves the point of sale from the problems of identifying the buyer, and the buyer does not have to reveal any personal information to the seller at the point of sale, thus taking away any risk of misuse of such personal information, which is an advantage not only at physical points of sale but also at virtual points of sale where there are many problems around identifying the buyer without compromising personal integrity of the buyer.

The present invention can be implemented in all kinds of points of sale, both mobile and stationary physical points of sale and virtual points of sale. The invention can even be implemented as a way to transfer funds between persons, where one person's personal device can act as a point of sale and produce and show an identity which is read by another person's mobile device, which other person act as a buyer, and the invention can be used between these persons to move funds from one person to the other.

It is an advantage that the present invention can be used to introduce the possibility for new merchants to set up a point of sale with a simple computer that can communicate with a transaction system, which is an advantage for businesses with small economical means. The invention also opens the possibilities for economical transactions without having to manage cash, which is an advantage in areas where crime is a problem.

### Brief description of the drawings

A method, an arrangement and computer program products according to the present invention will now be described in detail with reference to the accompanying drawings, in which:
- Figure 1: is a schematic and simplified illustration of a method and arrangement according to the present invention,
- Figure 2: is a schematic and simplified illustration of a mobile device and a point of sale,
- Figure 3: is a schematic and simplified illustration of a personal device functioning as a point of sale, and
- Figure 4: is a schematic and simplified illustration of a virtual point of sale.

### Description of embodiments as presently preferred

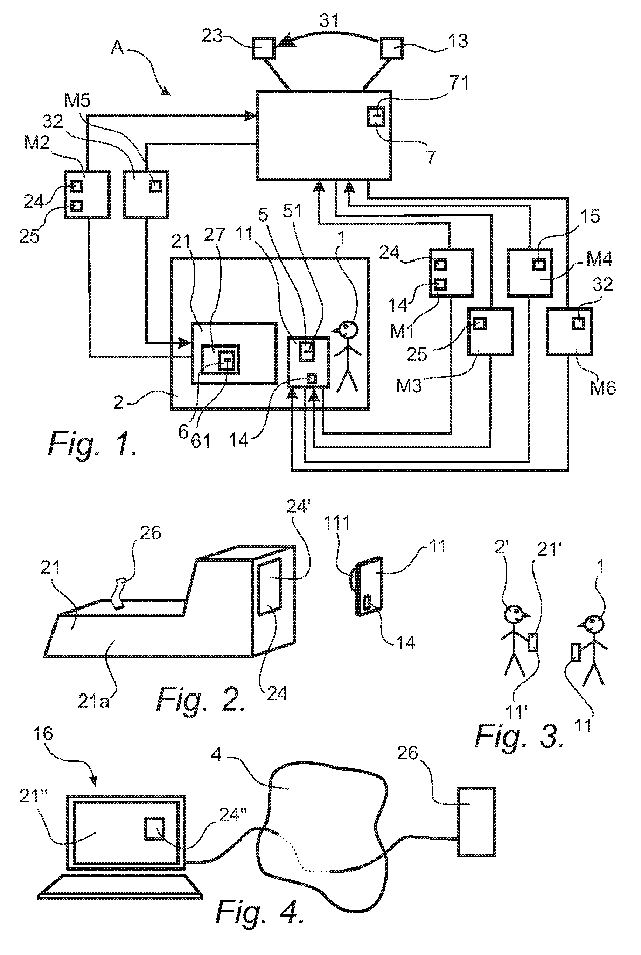

The present invention will now be described with reference to figure 1 showing a method for identifying a buyer 1 and a seller 2. The buyer 1 is present at a point of sale 21, and for performing an economical transaction between the buyer 1 and the seller 2.

The buyer 1 has a mobile device 11, which can be anything through which the buyer can access online communication with a transaction system 3, such as a smart phone, a personal digital assistant, or a mobile computer. The point of sale 21 can also communicate with the transaction system 3. The mobile device has a unique identity 14, which is connected to the owner of the mobile device, the buyer 1. This unique identity can for instance be a telephone number, or a subscriber identity found on a SIM card belonging to the device.

The transaction system 3 transfers funds 31 from one economical institution 13 used by the buyer 1 to the an economical institution 23 used by the seller 2 according to given information from the buyer 1 and the seller 2. In this example the buyer and the seller use different economical institutions, 13, 23, however, it is obvious that the buyer 1 and the seller 2 can use the same economical institution.

With reference to figure 1 and 2 it is shown that the inventive method comprises the steps of:
- the mobile device 11 reading an identity 24 of the point of sale 21 by means of a camera 111 belonging to the mobile device 11,
- the mobile device 11 generating and sending a first message M1 to the transaction system 3, the first message M1 comprising the identity 24 of the point of sale 21 and the identity 14 of the mobile device,
- the point of sale generating and sending a second message M2, time wise independent from the first message M1, to the transaction system 3, the second message M2 comprising the identity 24 of the point of sale 21 and the sum to be paid 25 in the transaction,
- the transaction system 3 matching the first message M1 with the second message M2 by means of the identity 24 of the point of sale 21,
- the transaction system 3 generating and sending a third message M3 to the mobile device 11, the third message M3 comprising the sum to be paid 25,
- the buyer 1 approving or rejecting the sum to be paid 25 on the mobile device 11,
- the mobile device 11 generating and sending a fourth message M4 to the transaction system 3, the fourth message M4 comprising an approval or rejection 15 of the transfer of funds from the buyer to the seller according to the approved sum to be paid 25,
- the transaction system 3 performing the transfer of the approved funds 31 from the buyer 1 to the seller 2, and
- the transaction system 3 generating and sending a fifth message M5 to the point of sale 21, the fifth message M5 comprising a confirmation 32 of the transfer of funds 31.

The first and second message M1, M2 are as described sent time wise independent from each other, meaning that the invention is in no way depending on if the buyer generate and send the first message M1 by means of the mobile device 11 before or after that the point of sale generate and send the second message.

Methods for moving funds from the account of the buyer 13 to the account of the seller 23 by means of a transaction system 3 are well known to the skilled person, hence this will not be described in more detail here since the present invention is not related to this particular part of the method.

It is proposed that the buyer 1 is using a personal code on the mobile device 11 to approve the sum to be paid 25.

The identity of the point of sale 24 may be represented by a graphical tag 24', and that the mobile device 11 translates the graphical tag 24' into the identity of the point of sale 24.

This graphical tag 24' can be a bar code, a quick response code, a datamatrix, or a proprietary code such as a shotcode.

The point of sale 21 may be a physical point of sale, and this can be a stationary point of sale, such as a warehouse, a supermarket, a restaurant, a hair dresser or a petrol station, or a mobile point of sale, such as a point of sale that belongs to a bus, a train, a boat, a taxi, a mobile sales representative, or a mobile point of sale in a restaurant.

According to one possible embodiment illustrated in figure 3, it is proposed that a personal device 11' functions as a point of sale 21', and that two person, the owner of the personal device 2' and the buyer 1, use the inventive method to send funds from the buyer 1 to the owner 2' of the personal device 11', the personal device 11'being any personal device where through the owner of the personal device 2' can access the transaction system 3, such as a mobile telephone, a mobile computer or a stationary computer.

A traditional point of sale 21 is a cashier register 21 a, as illustrated in figure 2, and in an embodiment where the present invention is implemented for a cashier register 21 a it is proposed that the cashier register 21 a, directly or indirectly, generates the second M2 message and receives the fifth message M5.

It is possible to generate a receipt 26 for the transaction to the buyer 2 from the point of sale 21.

Figure 4 illustrates that the point of sale can also be a virtual point of sale, such as an online shop available on the Internet 4.

In this case the point of sale 21" is a server 26 related to the seller 2, and it is generated from the server 26 in a terminal 16 belonging to the buyer 1. The server 26 generates the second message M2 and receives the fifth message M5.

With a virtual point of sale 21" it is proposed that a that a unique identity for the point of sale 21' and a representation 24" of the unique identity is generated and displayed on the terminal 16 used by the buyer 1 for each transaction.

Even if the point of sale 21 confirms the transfer of funds by a receipt 26 or in any other way, it is proposed that also the transaction system 3 can generate and send a sixth message M6 to the mobile device 11, the sixth message M6 comprising a confirmation 32 of the transfer of funds.

With a mobile point of sale it is proposed that the point of sale 21 communicates with the transaction system 3 by means of wireless communication.

Also the mobile device 11 communicates with the transaction system 3 by means of wireless communication.

With renewed reference to figure 1we will now describe an arrangement A according to the present invention, comprising a mobile device 11, a point of sale 21 and a transaction system 3.

The inventive arrangement A is adapted to identify a buyer 1 and a seller 2 and to perform an economical transaction between the buyer 1 and the seller 2, the point of sale 21 belonging to the seller 2 and the mobile device 11 belonging to the buyer 1.

The mobile device 11 has a unique identity 14, which is connected to the owner of the mobile device, the buyer 1. This unique identity can for instance be a telephone number, or a subscriber identity found on a SIM card belonging to the device.

The point of sale 21 and the transaction system 3 are adapted to communicate with each other, and the transaction system 3 is adapted to transfer funds 31 from the buyer 1 to the seller 2, or from an economical institution 13 belonging to the buyer 1 to an economical institution 23 belonging to the seller 2, according to given information from the buyer and the seller.

With reference to figures 1 and 2 it is shown that the present invention specifically teaches that:
- the mobile device 11 and the transaction system 3 are adapted to communicate with each other,
- the mobile device 11 comprises a camera 111, and that the mobile device 11 is adapted to read an identity 24 of the point of sale 21 by means of the camera 111,
- the mobile device 11 is adapted to generate and send a first message M1, to the transaction system 3, the first message M1 comprising the identity of the point of sale 24 and the identity of the mobile device 14,
- the point of sale 21 is adapted to generate and send a second message M2, time wise independent from the first message M1, to the transaction system 3, the second message M2 comprising the identity of the point of sale 24 and the sum to be paid 25,
- the transaction system 3 is adapted to match the first message M1 with the second message M2 by means of the identity of the point of sale 24,
- the transaction system 3 is adapted to generate and send a third message M3 to the mobile device 11, the third message M3 comprising the sum to be paid 25,
- the mobile device 11 is adapted to receive an approval or rejection 15 of the sum to be paid from the buyer,
- the mobile device 11 is adapted to generate and send a fourth message M4 to the transaction system 3, the fourth message M4 comprising an approval or rejection 15 of the transfer of funds from the buyer to the seller according to the approved sum to be paid 25,
- the transaction system 3 is adapted to perform the transfer of the approved funds 31 from the buyer 1 to the seller 2, and
- the transaction system 3 is adapted to generate and send a fifth message M5 to the point of sale 21, the fifth message M5 comprising a confirmation 32 of the transfer of funds 31.

Means for moving funds from the account of the buyer to the account of the seller are found in the transaction system 3 and are well known to the skilled person, hence they will not be described in more detail here since the present invention is not related to this particular part of the arrangement A.

The mobile device 11 is adapted to receive a personal code from the buyer 1 in order for the buyer to approve the sum to be paid 25.

The identity of the point of sale 24 can be represented by a graphical tag 24', and the mobile device 11 is adapted to translate the graphical tag 24' into the identity of the point of sale 24. The graphical tag 24' can be a bar code, a quick response code, a datamatrix, or a proprietary code such as a shotcode.

The point of sale 21 can be a physical point of sale, in which case it can be a stationary point of sale, such as a warehouse, a restaurant, a hair dresser or a petrol station, or a mobile point of sale, such as a point of sale that belongs to a bus, a train, a boat, a taxi, a mobile sales representative or a mobile point of sale in a restaurant.

With reference to figure 3 a more small scale implementation of the present invention is illustrated where a personal device 11' is adapted to function as a point of sale 21, and where the personal device 11' and the mobile device 11 are adapted to enable two persons, the owner 2' of the personal device 11' and the buyer 1, to send funds from the buyer 1 to the owner 2' of the personal device 11'. The personal device 11' can be any personal device where through the owner 2' of the personal device can access the transaction system 3, such as a mobile telephone, a mobile computer or a stationary computer.

The point of sale 21 may also be a cashier register, as illustrated in figure 2, in which case the cashier register can be adapted to generate the second message M2 and receive the fifth message M5.

The point of sale 21 can be adapted to generate a receipt 26 for the transaction to the buyer 1.

Figure 4 illustrates that the point of sale 21" may also be a virtual point of sale hosted by a server 26 related to the seller 2, in which the point of sale 21" is an online shop available on the Internet 4 and displayed to the buyer on a terminal 16 used by the buyer.

The server 26 may be adapted to generate the second message M2 and receive the fifth message M5. The server 26 may also be adapted to generate a unique identity for the point of sale 21" and a representation 24" of the unique identity and to display a representation of the identity 24" on the virtual point of sale 21" for each transaction.

Regardless of if the point of sale provides 21 a receipt 26 to the buyer 1 or not, it s proposed that the transaction system 3 can be adapted to send a sixth message M6 to the mobile device 11, the sixth message M6 comprising a confirmation 32 of the transfer of funds 31.

If the point of sale 21 is a mobile point of sale it is proposed that it is adapted to communicate with the transaction system 3 by means of wireless communication.

The mobile device 11 is also adapted to communicate with the transaction system 3 by means of wireless communication.

The present invention also relates to a computer program product 5 comprising computer program code 51, which, when executed by a mobile device 11, enables the mobile device 11 to perform the steps of:
- reading an identity 24 of a point of sale 21 by means of a camera 111 belonging to the mobile device 11,
- generating and sending a first message M1 to a transaction system 3, the first message M1 comprising the identity 24 of the point of sale 21 and the identity 14 of the mobile device 11,
- receiving from the transaction system 3 a third message M3, the third message M3 comprising a sum to be paid 25,
- receiving an approval or rejection 15 from a buyer 1 approving or rejecting the sum to be paid 25, and
- generating and sending a fourth message M4 to the transaction system 3, the fourth message M4 comprising an approval or rejection 15 of the transfer of funds 31 from the buyer to the seller according to the approved sum to be paid 25.

This computer program code 51 may also enable the mobile device 11 to perform the step of receiving a personal code from the buyer 1 to identify the buyer 1 as the buyer approves the sum to be paid 25.

This computer program code 51 may also enable the mobile device 11 to perform the step of translating a graphical tag 24' received through the camera 111 into the identity of the point of sale 24.

The present invention also relates to a computer program product 6 comprising computer program code 61, which, when executed by a computer 27 belonging to a point of sale 21, enables the computer 27 to perform the steps of:
- generating and sending a second message M2 to a transaction system 3, the second message M2 comprising the identity of the point of sale 24 and a sum to be paid 25, and
- receiving from the transaction system 3 a fifth message M5, the fifth message M5 comprising a confirmation 32 of the transfer of funds 31.

This computer program code 61 may also enable the computer 27 to perform the steps of
- generating a unique identity and a representation 24" of the unique identity for the point of sale 21' for each transaction, and
- displaying the representation 24" of the unique identity.

The present invention also relates to a computer program product 7 comprising computer program code 71, which, when executed by a transaction system 3 enables the transaction system 3 to perform the steps of:
- receiving from a mobile device 11 a first message M1, the first message M1 comprising the identity of a point of sale 24 and the identity of the mobile device 14,
- receiving from the point of sale 21 a second message M2, the second message M2 comprising the identity of the point of sale 24 and a sum to be paid 25,
- matching the first message M1 with the second message M2 by means of the identity of the point of sale 24,
- generating and sending a third message M3 to the mobile device 11, the third message M3 comprising the sum to be paid 25,
- receiving from the mobile device 11 a fourth message M4, the fourth message M4 comprising an approval or rejection 15 of the transfer of funds 31 from the buyer 1 to the seller 2 according to the approved sum to be paid 25,
- performing the transfer of the approved funds 31 from the buyer 1 to the seller 2, and
- generating and sending a fifth message M5 to the point of sale 21, the fifth message M5 comprising a confirmation 32 of the transfer of funds 31.

This computer program code 71 may also enable the transaction system 3 to perform the step of generating and sending a sixth message M6 to the mobile device 11, the sixth message M6 comprising a confirmation 32 of the transfer of funds 31.

In the figures the different computer program products 5, 6, 7 are illustrated as being operable within a unit and stored in the some memory area of this unit, however it will be understood that the computer program products 5, 6, 7 also can be stored in any kind of computer readable medium, volatile or nonvolatile, to make it available for commercialization and distribution.

In all communication described above it is shown that different generated and sent messages comprises certain information, it will be understood that these messages may comprise further information not specified here, information required to safeguard the communication or other information that might be required to identify the buyer and/or seller in the transaction system in order to perform the transfer of funds.

It will be understood that the invention is not restricted to the aforedescribed and illustrated exemplifying embodiments thereof and that modifications can be made within the scope of the invention as defined by the accompanying Claims.

## Claims

1. A method for identifying a buyer and a seller where the buyer is present at a point of sale, and for performing an economical transaction between the buyer and the seller, where the buyer has a mobile device, where the point of sale communicates with a transaction system, and where the transaction system transfers funds from the buyer to the seller according to given information from the buyer and the seller, **characterized in**,
- the mobile device reading an identity of the point of sale by means of a camera belonging to the mobile device,
- the mobile device generating and sending a first message to the transaction system, the first message comprising the identity of the point of sale and the identity of the mobile device,
- the point of sale generating and sending a second message, time wise independent from the first message, to the transaction system, the second message comprising the identity of the point of sale and the sum to be paid,
- the transaction system matching the first message with the second message by means of the identity of the point of sale,
- the transaction system generating and sending a third message to the mobile device, the third message comprising the sum to be paid,
- the buyer approving or rejecting the sum to be paid on the mobile device,
- the mobile device generating and sending a fourth message to the transaction system, the fourth message comprising an approval or rejection of the transfer of funds from the buyer to the seller according to the approved sum to be paid,
- the transaction system performing the transfer of the approved funds from the buyer to the seller, and
- the transaction system generating and sending a fifth message to the point of sale, the fifth message comprising a confirmation of the transfer of funds.

2. A method according to claim 1, **characterized in**, the buyer using a personal code on the mobile device to approve the sum to be paid.

3. A method according to claim 1 or 2, **characterized in, that** the identity of the point of sale is represented by a graphical tag, and that the mobile device translates the graphical tag into the identity of the point of sale.

4. A method according to claim 3, **characterized in, that** the graphical tag is a bar code, a quick response code, a datamatrix, or a proprietary code such as a shotcode.

5. A method according to claim 1, 2, 3 or 4, **characterized in, that** the point of sale is a physical point of sale.

6. A method according to claim 5, **characterized in, that** the point of sale is a stationary point of sale, such as a warehouse, a supermarket, a restaurant, a hair dresser or a petrol station.

7. A method according to claim 5, **characterized in, that** the point of sale is a mobile point of sale, such as a point of sale that belongs to a bus, a train, a boat, a taxi, a mobile sales representative, or a mobile point of sale in a restaurant.

8. A method according to claim 6 or 7, **characterized in, that** a personal device functions as a point of sale, and that two person, the owner of the personal device and the buyer, use the method to send funds from the buyer to the owner of the personal device, the personal device being any personal device where through the owner of the personal device can access the transaction system, such as a mobile telephone, a mobile computer or a stationary computer.

9. A method according claim 6 or 7, **characterized in, that** the point of sale is a cashier register, and that the cashier register generates the second message and receives the fifth message.

10. A method according to any one of claims 1 to 9, **characterized in**, the point of sale generating a receipt for the transaction to the buyer.

11. A method according to claim 1, 2, 3 or 4, **characterized in, that** the point of sale is a virtual point of sale.

12. A method according to claim 11, **characterized in, that** the point of sale is an online shop available on the Internet.

13. A method according to claim 12, **characterized in, that** the point of sale is a server related to the seller, and that the server generates the second message and receives the fifth message.

14. A method according to any one of claims 11 to 13, **characterized in, that** a unique identity for the point of sale is generated and a representation of the unique identity is displayed for each transaction.

15. A method according to any preceding claim, **characterized in**, the transaction system generating and sending a sixth message to the mobile device, the sixth message comprising a confirmation of the transfer of funds.

16. A method according to claim 7 or 8, **characterized in, that** the point of sale communicates with the transaction system by means of wireless communication.

17. A method according to any preceding claim, **characterized in, that** the mobile device communicates with the transaction system by means of wireless communication.

18. An arrangement comprising a mobile device, a point of sale and a transaction system, the arrangement being adapted to identify a buyer and a seller and to perform an economical transaction between the buyer and the seller, the point of sale belonging to the seller and the mobile device belonging to the buyer, where the point of sale and the transaction system are adapted to communicate with each other, and where the transaction system is adapted to transfer funds from the buyer to the seller according to given information from the buyer and the seller, **characterized in, that**
- the mobile device and the transaction system are adapted to communicate with each other,
- the mobile device comprises a camera, and that the mobile device is adapted to read an identity of the point of sale by means of the camera,
- the mobile device is adapted to generate and send a first message, to the transaction system, the first message comprising the identity of the point of sale and the identity of the mobile device,
- the point of sale is adapted to generate and send a second message, time wise independent from the first message, to the transaction system, the second message comprising the identity of the point of sale and the sum to be paid,
- the transaction system is adapted to match the first message with the second message by means of the identity of the point of sale,
- the transaction system is adapted to generate and send a third message to the mobile device, the third message comprising the sum to be paid,
- the mobile device is adapted to receive an approval or rejection of the sum to be paid from the buyer,
- the mobile device is adapted to generate and send a fourth message to the transaction system, the fourth message comprising an approval or rejection of the transfer of funds from the buyer to the seller according to the approved sum to be paid,
- the transaction system is adapted to perform the transfer of the approved funds from the buyer to the seller, and
- the transaction system is adapted to generate and send a fifth message to the point of sale, the fifth message comprising a confirmation of the transfer of funds.

19. An arrangement according to claim 18, **characterized in, that** the mobile device is adapted to receive a personal code from the buyer in order for the buyer to approve the sum to be paid.

20. An arrangement according to claim 18 or 19, **characterized in, that** the identity of the point of sale is represented by a graphical tag, and that the mobile device is adapted to translate the graphical tag into the identity of the point of sale.

21. An arrangement according to claim 20, **characterized in, that** the graphical tag is a bar code, a quick response code, a datamatrix, or a proprietary code such as a shotcode.

22. An arrangement according to claim 18, 19, 20 or 21, **characterized in, that** the point of sale is a physical point of sale.

23. An arrangement according to claim 22, **characterized in, that** the point of sale is a stationary point of sale, such as a warehouse, a restaurant, a hair dresser or a petrol station.

24. An arrangement according to claim 22, **characterized in, that** the point of sale is a mobile point of sale, such as a point of sale that belongs to a bus, a train, a boat, a taxi, a mobile sales representative or a mobile point of sale in a restaurant.

25. An arrangement according to claim 23 or 24, **characterized in, that** a personal device is adapted to function as a point of sale, that the personal device and the mobile device are adapted to enable two person, the owner of the personal device and the buyer, to send funds from the buyer to the owner of the personal device, that the personal device is any personal device where through the owner of the personal device can access the transaction system, such as a mobile telephone, a mobile computer or a stationary computer.

26. An arrangement according claim 23 or 24, **characterized in, that** the point of sale is a cashier register, and that the cashier register is adapted to generate the second message and receive the fifth message.

27. An arrangement according to any one of claims 18 to 26, **characterized in, that** the point of sale is adapted to generate a receipt for the transaction to the buyer.

28. An arrangement according to claim 18, 19, 20 or 21, **characterized in, that** the point of sale is a virtual point of sale hosted by a server related to the seller.

29. An arrangement according to claim 28, **characterized in, that** the point of sale is an online shop available on the Internet.

30. An arrangement according to claim 18, **characterized in, that** the server is adapted to generate the second message and receive the fifth message.

31. An arrangement according to any one of claims 28 to 30, **characterized in, that** the server is adapted to generate a unique identity for the point of sale and a representation of the unique identity for each transaction and to display the representation of the identity on the virtual point of sale.

32. An arrangement according to any one of claims 18 to 31, **characterized in, that** the transaction system is adapted to send a sixth message to the mobile device, the sixth message comprising a confirmation of the transfer of funds.

33. An arrangement according to claim 24 or 25, **characterized in, that** the point of sale is adapted to communicate with the transaction system by means of wireless communication.

34. An arrangement according to any one of claims 18 to 33, **characterized in, that** the mobile device is adapted to communicate with the transaction system by means of wireless communication.

35. A computer program product comprising computer program code, which, when executed by a mobile device, enables the mobile device to perform the steps of:
- reading an identity of a point of sale by means of a camera belonging to the mobile device,
- generating and sending a first message to a transaction system, the first message comprising the identity of the point of sale and the identity of the mobile device,
- receiving from the transaction system a third message, the third message comprising a sum to be paid,
- receiving an approval or rejection from a buyer approving or rejecting the sum to be paid, and
- generating and sending a fourth message to the transaction system, the fourth message comprising an approval or rejection of the transfer of funds from the buyer to the seller according to the approved sum to be paid.

36. A computer program product according to claim 35, comprising computer program code which, when executed by the mobile device, enables the mobile device to perform the step of receiving a personal code from the buyer to identify the buyer as the buyer approves the sum to be paid.

37. A computer program product according to claim 35 or 36, comprising computer program code which, when executed by the mobile device, enables the mobile device to perform the step of translating a graphical tag received through the camera into the identity of the point of sale.

38. A computer program product comprising computer program code, which, when executed by a computer belonging to a point of sale, enables the computer to perform the steps of:
- generating and sending a second message to a transaction system, the second message comprising the identity of the point of sale and a sum to be paid, and
- receiving from the transaction system a fifth message, the fifth message comprising a confirmation of the transfer of funds.

39. A computer program product according to claim 38 comprising computer program code, which, when executed by a computer belonging to a point of sale, enables the computer to perform the steps of
- generating a unique identity for the point of sale and a representation of the unique identity for each transaction, and
- displaying the representation of the generated identity.

40. A computer program product comprising computer program code, which, when executed by a transaction system enables the transaction system to perform the steps of:
- receiving from a mobile device a first message, the first message comprising the identity of a point of sale and the identity of the mobile device,
- receiving from the point of sale a second message, the second message comprising the identity of the point of sale and a sum to be paid,
- matching the first message with the second message by means of the identity of the point of sale,
- generating and sending a third message to the mobile device, the third message comprising the sum to be paid,
- receiving from the mobile device a fourth message, the fourth message comprising an approval or rejection of the transfer of funds from the buyer to the seller according to the approved sum to be paid,
- performing the transfer of the approved funds from the buyer to the seller, and
- generating and sending a fifth message to the point of sale, the fifth message comprising a confirmation of the transfer of funds.

41. A computer program product according to claim 40 comprising computer program code, which, when executed by a transaction system enables the transaction system to perform the step of generating and sending a sixth message to the mobile device, the sixth message comprising a confirmation of the transfer of funds.
